# EUROPÄISCHE PATENTSCHRIFT

(11) **EP 1 088 383 B1**
(45) Veröffentlichungstag und Bekanntmachung des Hinweises auf die Patenterteilung: **04.01.2006**
(21) Anmeldenummer: 99939357.2
(22) Anmeldetag: 17.06.1999
(51) Int. Cl.: H02K 5/136

(54) **VERFAHREN ZUR FÜHRUNG VON IM INNERN EINES GEHÄUSES GEBILDETEN EXPLOSIONSGASEN DURCH ZÜNDDURCHSCHLAGSICHER AUSGEBILDETE SPALTE UND EXPLOSIONSGESCHÜTZTES GEHÄUSE**
METHOD FOR GUIDING EXPLOSIVE GASES FORMED INSIDE A HOUSING THROUGH FLAMEPROOF JOINTS, AND EXPLOSION-PROTECTED HOUSING
PROCEDE POUR LE GUIDAGE DE GAZ EXPLOSIFS FORMES A L'INTERIEUR D'UN LOGEMENT, A TRAVERS DES FENTES EMPECHANT LES DECHARGES D'AMOR AGE, ET CARTER ANTI-EXPLOSIONS

(30) Priorität: 17.06.1998 DE 19826911
(43) Veröffentlichungstag der Anmeldung: 04.04.2001
(73) Patentinhaber: Bundesrepublik Deutschland, vertr. durch d. Bundesministerium f. Wirtschaft und Arbeit,, 38116 Braunschweig (DE)
(72) Erfinder: KLAUSMEYER, Uwe, D-38116 Braunschweig (DE); Markus, Detlef, Dr., 38116 Braunschweig (DE)
(74) Vertreter: Lins, Edgar
(86) Internationale Anmeldenummer: PCT/DE1999/001778
(87) Internationale Veröffentlichungsnummer: WO 1999/066626

(56) Entgegenhaltungen:
- CH-A- 535 529
- DE-A- 2 901 111
- DE-B- 1 132 230
- DE-C- 611 681
- FR-A- 2 341 081
- US-A- 2 323 146

## Beschreibung

Die Erfindung betrifft ein explosionsgeschütztes Gehäuse mit konstruktiv bedingten, nach den Anforderungen für druckfest gekapselte Gehäuse zünddurchschlagsicher ausgebildeten Spalten mit im Wesentlichen zueinander parallelen Spaltoberflächen.

Zur Verhinderung von Explosionen in explosionsgefährdeten Bereichen ist es bekannt, besondere Maßnahmen vorzusehen, die verhindern, dass der explosionsgefährdete Bereich von einer Explosion erfasst wird. Dies kann dadurch geschehen, dass beispielsweise bei elektrischen Geräten durch Steuerung der dabei wirksamen Energien dafür gesorgt wird, dass eine Zündung der potentiell explosiblen Atmosphäre nicht erfolgt. In vielen Fällen lässt sich aufgrund der Natur des Gerätes, beispielsweise bei der Verwendung einer Flamme oder bei energiereicheren elektrischen Anlagen, nicht vermeiden, dass es zu einer Explosion kommen kann. In diesem Fall wird das Gerät durch sein Gehäuse druckfest gekapselt, also dafür gesorgt, dass durch das druckfeste Gehäuse die Explosion im Innern des Gehäuses bleibt und nicht in den explosionsgefährdeten Außenbereich gelangt. Ein derartiges Gerätegehäuse muss in aller Regel geöffnet werden können oder es müssen Leitungen oder bei einem elektrischen Motor eine Welle nach außen geführt werden. In allen Fällen entstehen Spalte, die so ausgebildet sein müssen, dass sie eine etwaige Explosionsflamme im Innern des Gehäuses löschen und abkühlen, bevor die entsprechenden Explosionsgase in den Außenraum gelangen und dort etwaige explosible Gase zünden.

Zur Gewährleistung einer ausreichenden Sicherheit für die Vermeidung des Austritts von Explosionen in den Außenraum eines druckfest gekapselten Gehäuses spielen die Parameter Spaltlänge und Spaltweite eine entscheidende Rolle. Die Spalte müssen so eng und so lang bemessen sein, dass eine Flamme der Gasexplosion gelöscht wird und die nachfolgenden Rauchgase der Explosion ausreichend abgekühlt nach außen strömen, um eine Wiederzündung im Außenbereich zu verhindern. Die genannten Vorschriften sehen auch detaillierte konstruktive Ausführungen der Flammenlöschspalte vor. Für die konstruktive Verlängerung der Spaltlänge können dabei Labyrinthspalte, z.B. im Austritt einer Welle, zur Anwendung kommen, die sich jedoch nur außerordentlich aufwendig realisieren lassen.

Die bekannte Variation von Spaltlänge und Spaltweite, also die Ausbildung möglichst enger und möglichst langer Spalte, stößt im Einzelfall auf erhebliche konstruktive Schwierigkeiten, die zu einer erheblichen Verteuerung des Gerätes führen. Sollte sich bei der experimentellen Prüfung eines Gerätes herausstellen, dass die vorgesehenen Spaltlängen und Spaltweiten keine ausreichende Sicherheit gegen austretende Explosionen gewährleisten, muss der getestete Prototyp umkonstruiert und noch aufwendiger gestaltet werden.

Durch DE-AS 1 132 230 ist es bekannt, das zum Gehäuseinnern zeigende Ende eines zünddurchschlagsicher ausgebildeten Spaltes von der Gehäusewand hervorstehend mit spitz zulaufenden Wandstücken zu begrenzen. Dadurch soll erreicht werden, dass beim Auftreten einer Explosionswelle im Innern des Gehäuses eine Luftströmung entsteht, die am Spalteingang einen Unterdruck bewirkt, sodass der Eintritt von Gasen und insbesondere glühenden Festteilchen in den Spalt behindert wird.

Durch DE-PS 611 681 ist es grundsätzlich bekannt, einen vom Gehäuseinnern nach außen verlaufenden Ringspalt um eine sich drehende Welle als Labyrinthspalt dadurch auszubilden, dass auf die Welle ein den Spalt fortsetzendes Bauelement aufgesetzt ist.

Durch FR 2 341 081 A1 ist es ferner bekannt, die Spaltwände auf einen Teil der Länge des Spaltes mit gekrümmten Ausnehmungen zu versehen, die eine Verwirbelung der Luftströmung in dem Spalt bewirken und etwaige glühende Festteilchen auffangen sollen.

Alle bekannten Maßnahmen ermöglichen jeweils nur geringfügige Verbesserungen der Löschwirkung der zünddurchschlagsicher ausgebildeten Spalte, sodass das Problem einer aufwendigen genauen Fertigung weiter besteht.

Der vorliegenden Erfindung liegt daher die Aufgabe zugrunde, eine konstruktive Maßnahme anzugeben, die eine deutliche Verbesserung der Löschwirkung eines zünddurchschlagsicher ausgebildeten Spaltes bewirkt, sodass der Spalt mit üblichen Fertigungstoleranzen gefertigt werden kann.

Diese Aufgabe wird erfindungsgemäß mit einem explosionsgeschützten Gehäuse der eingangs erwähnten Art gelöst, das dadurch gekennzeichnet ist, dass der Spalt teilweise durch einen porösen Körper aus einem gut wärmeleitenden Material begrenzt ist, der wenigstens von einem Teil der im Spalt transportierten Gase durchströmt wird.

Die Herabsetzung der Zündfähigkeit der durch den Spalt hindurchtretenden Gase gelingt erfindungsgemäß dadurch, dass der Spalt teilweise durch einen porösen, den Gasdurchtritt erlaubenden Körper aus gut wärmeleitenden Material begrenzt ist, sodass ein Teil der durch den Spalt hindurchtretenden Gase den porösen Körper durchläuft und dabei abgekühlt wird. Es ist aber auch möglich, den porösen Körper so anzuordnen, dass das gesamte Gas, das durch den Spalt hindurchtritt, auch den porösen Körper durchläuft und so eine zusätzliche Abkühlung erfährt.

Die Wirkung der erfindungsgemäßen Anordnung wird noch dadurch verbessert, dass der Spalt als Labyrinthspalt, also mit wenigstens einer Umlenkung ausgebildet ist.

Der poröse Körper kann vorzugsweise aus einem Sintermaterial gebildet sein.

Die Herabsetzung der Zündfähigkeit der durch den Spalt hindurchtretenden Gase kann durch eine katalytisch wirksame Ausbildung wenigstens einer der Spaltoberflächen verbessert werden. Dabei kann die katalytische Ausbildung nicht nur durch eine katalytische Beschichtung der Spaltoberfläche sondern auch durch die Ausbildung des porösen Körpers aus katalytischem Material realisiert werden. Durch die katalytische Beschichtung können reaktive Gruppen der Explosionsgase rekombinieren, also "Nachverbrennen", sodass aus dem Spalt überwiegend inerte Reaktionsprodukte austreten, also die Gefahr einer die Zündung im Außenraum hervorrufenden exothermen Reaktion herabgesetzt wird. Da bei dieser Ausbildung des Spaltes exotherme Reaktionen innerhalb des Spaltes ablaufen, muss darauf geachtet werden, dass die aus dem Spalt austretenden Gase ausreichend abgekühlt werden, beispielsweise durch Nachschaltung eines porösen Körpers zur Durchführung dieser Abkühlung.

Die Erfindung soll im Folgenden anhand von in der Zeichnung dargestellten Ausführungsbeispielen näher erläutert werden. Es zeigen:
- Figur 1: einen Schnitt durch einen Elektromotor in einem druckfest gekapselten Gehäuse
- Figuren 2 bis 5: durch poröse, gasdurchlässige Körper gebildete Bypass-Wege für einen Spalt
- Figuren 6 bis 8: Anordnungen von porösen, gasdurchlässigen Körpern als von der gesamten Gasmenge durchströmte Eingänge und Ausgänge von Spalten
- Figur 9: eine Ausbildung eines porösen, gasdurchlässigen Körpers mit einer Kugelschüttung
- Figur 10: eine Ausbildung eines Wellendichtspalts unter Realisierung einer Kombination mehrerer Maßnahmen.

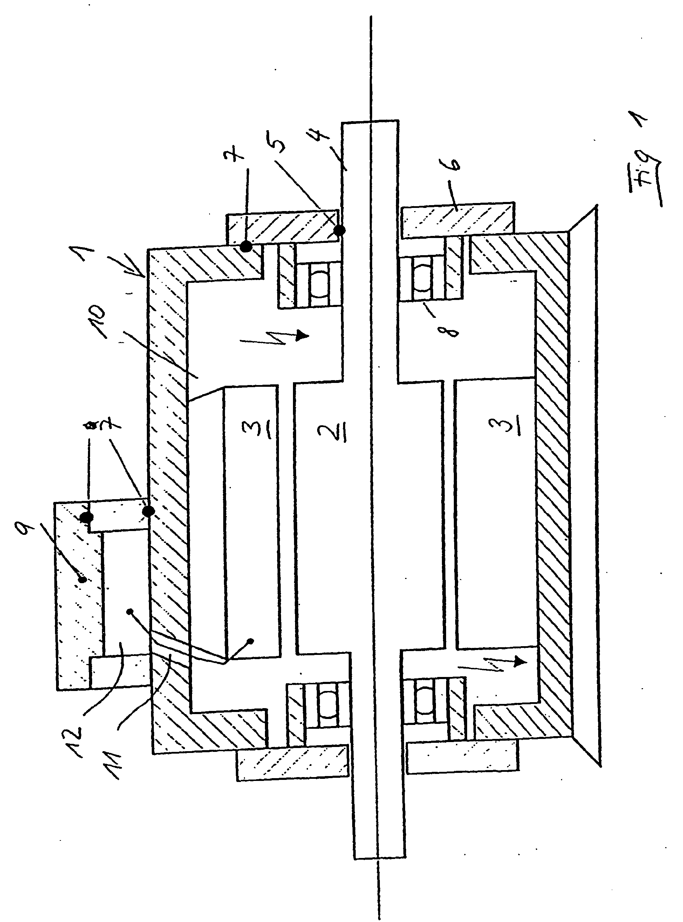

Figur 1 zeigt ein druckfest gekapseltes Gehäuse 1, das einen aus Rotor 2 und Stator 3 bestehenden Elektromotor beinhaltet. Der Rotor 2 ist mit Wellen 4 beidseitig aus dem druckfest gekapselten Gehäuse 1 herausgeführt. Zur Herausführung der Welle 4 bildet das Gehäuse einen Spalt 5 in Form eines Wellenabdichtspaltes zwischen der Welle 4 und einem Lagerschild 6, das über einen Flächenspalt 7 an dem Gehäuse 1 anliegt und mit diesem beispielsweise verschraubt ist. Das Lagerschild 6 trägt ein Kugellager 8 zur Führung der Welle 4.

Das Gehäuse ist mit einem aufgesetzten Anschlusskasten 9 versehen an dem ebenfalls Flachspalte 7 ausgebildet sind. Rotor 2 und Stator 3 befinden sich im Innenraum 10 des Gehäuses 1, der über einen Kabelkanal 11 mit einem Innenraum des Anschlusskastens 9 verbunden ist. Die nachfolgenden Zeichnungsfiguren befassen sich mit der Ausbildung der Spalte 5, 7. Die zwischen feststehenden Gehäuseteilen ausgebildeten Spalte 7 können als flache und/oder konzentrische Spalte ausgebildet sein.

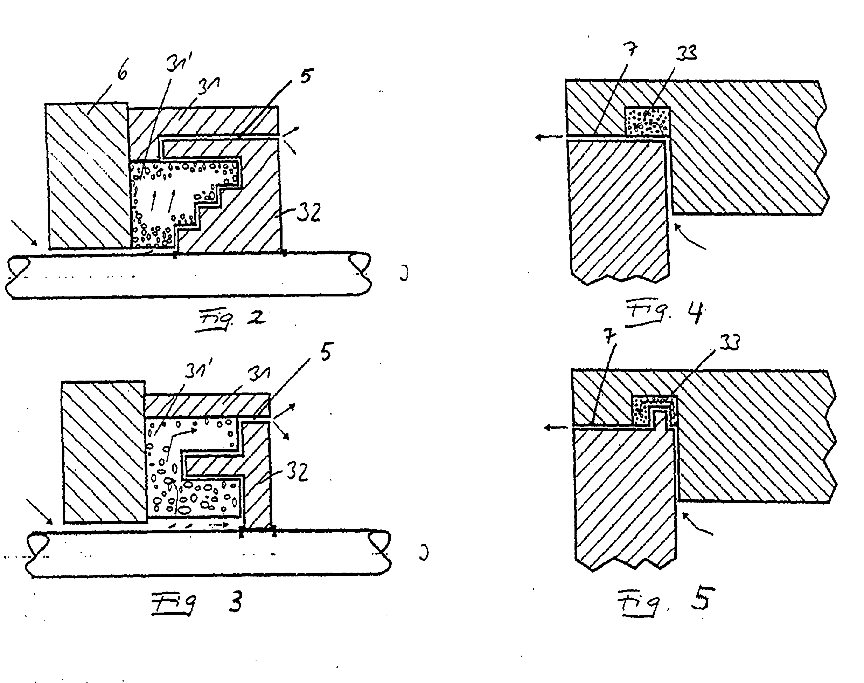

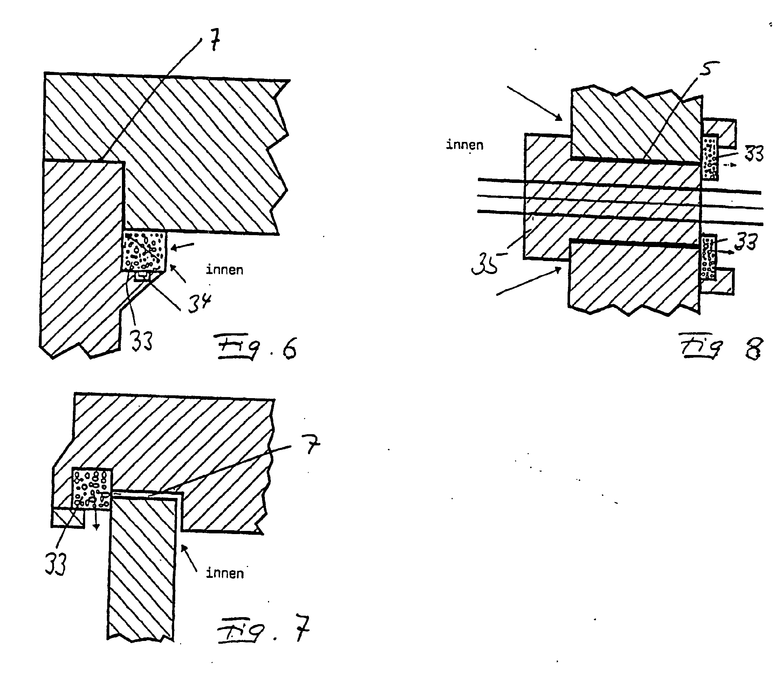

Bei den in den Figuren 2 und 3 dargestellten Ausführungsbeispielen ist ein Ringspalt 5 zwischen einer Welle 4 und dem Lagerschild 6 ausgebildet, der sich zwischen Ansatzteilen 31, 32 fortsetzt, wobei in dem dargestellten Ausführungsbeispiel die Ansatzzeile 31, 32 so ausgebildet sind, dass sie eine Art Labyrinthspalt zwischen sich einschließen. Ein Teil 31' des fetstehenden Ansatzes 31 ist dabei als poröser, gasdurchlässiger Körper ausgebildet, der über eine erhebliche Länge den gebildeten Labyrinthspalt begrenzt. Der poröse Körper bildet somit eine Art Bypass für das sonst im Spalt transportierte Gas. Da der poröse Körper 31' vorzugsweise aus gut wärmeleitendem Material, beispielsweise Sintermetallen gebildet ist, kühlt sich das ihn durchlaufende Gas schnell ab und tritt in den Austrittsteil des Spaltes 5 in stark abgekühlter Form ein.

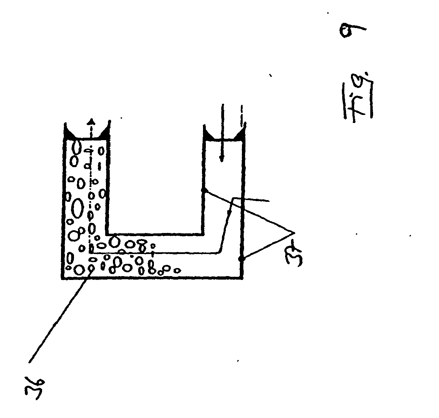

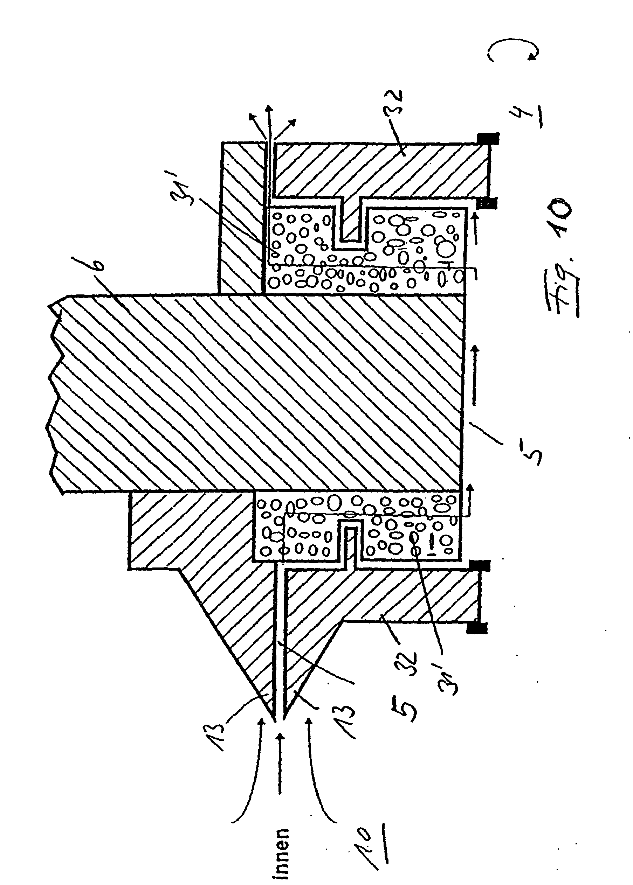

In gleicher Weise wirken die porösen Körper 33 für die Spalte 7 gemäß den Ausführungsformen in Figur 4 und Figur 5. Figur 5 zeigt eine Variante, bei der auch der Spalt 7 als Labyrinthspalt ausgebildet ist und in diesem Bereich von dem porösen Körper 33 begrenzt wird.

In Figur 6 ist ein poröser Körper 33 im Innenraum 10 am Spalteingang angeordnet und wird mit einem Federelement 34 gegen eine als Deckel wirkende Gehäusewand gedrückt.

In der Ausführungsform gemäß Figur 7 befindet sich der poröse Körper 33 am ausgangsseitigen Ende des Spaltes 7. In beiden Fällen durchströmen die gesamten, vom Spalt 7 transportierten Gase den porösen Körper 33, wodurch sie die gewünschte erhebliche Abkühlung erfahren.

Das Ausführungsbeispiels gemäß Figur 8 zeigt eine Anordnung, die wirkungsmäßig der Anordnung in Figur. 7 entspricht, jedoch für das Ausführungsbeispiel einer Kabeldurchführung 35 vorgesehen ist. Der dabei gebildete Ringspalt 5 wird durch einen ringförmigen porösen Körper 33 zur Außenseite hin abgeschlossen, wodurch der Abkühlungseffekt erzielt wird.

Figur 9 verdeutlicht, dass ein poröser Körper 31', 33 auch durch eine Kugelschüttung 36 gebildet sein kann, die sich in einem Gehäuse befindet, das die beiden Oberflächen 37 eines Spaltes bildet und an den axialen Enden verschweißt sein kann. Die Wände 37 können dabei ein gasdurchlässiges Sieb oder Lochblech sein. Die Ausbildung einer Kugelschüttung 36 ermöglciht die Verwendung von katalytisch wirksamen Pellets, die die Nachverbrennung der Explosionsgase ermöglichen und so bewirken, dass praktisch nur noch inerte Gase nach außen gelangen. Ggf. muss noch eine, Abkühlstrecke aus nicht katalytisch wirksamen Kugeln oder einem entsprechenden porösen Körper 33 vorgesehen werden, um eine Wiederzündung durch die aufgeheizten Gase im Außenraum zu verhindern.

Figur 10 zeigt schließlich eine Kombination verschiedener Maßnahmen an einem Ringspalt 5 zwischen einer Welle 4 und einem Lagerschild 6. Auf der Innenseite ist auf die Welle 4 ein Ansatz 32 mit der Ausbildung eines Strömungsteilers 13 angebracht. Ein ähnlicher Ansatz mit ebenfalls einem Strömungsteiler 13 befindet sich auf der Innenseite des Lagerschilds 6. Der Ringspalt 5 ist dabei als Labyrinthspalt ausgebildet und teilweise durch einen porösen Körper 31', der am Lagerschild 6 angebracht ist, begrenzt. Eine spiegelsymmetrische Ausbildung mit Ansätzen 31' und 32 findet sich auf der Ausgangsseite des Ringspaltes 5, auf der der Ringspalt 5 mit einem gegenüber dem Durchmesser der Welle 4 stark vergrößertem Durchmesser austritt.

Mit einer derartigen Kombination von Maßnahmen wird eine höchstmögliche Sicherheit erreicht. Diese erlaubt die Herabsetzung der sonst sehr engen Toleranzen für die Weite des Spaltes 5, wodurch erhebliche Einsparungen in der Fertigung erzielbar sind.

In allen beschriebenen Ausführungsformen kann vorgesehen werden, die jeweiligen Spaltoberflächen katalytisch zu beschichten, um die Nachverbrennungs- und Rekombinationseffekte zu erzielen.

## Patentansprüche

1. Explosionsgeschütztes Gehäuse für einen Elektromotor, das (1) konstruktiv bedingten, nach den Anforderungen für druckfest gekapselte Gehäuse (1) zünddurchschlagsicher ausgebildeten Spalten (5, 7) mit im Wesentlichen zueinander parallelen Spaltoberflächen aufweist, **dadurch gekennzeichnet, dass** jeder Spalt (5, 7) teilweise durch einen porösen Körper (31', 33) aus einem gut wärmeleitenden Material begrenzt ist, der wenigstens von einem Teil der im Spalt (5, 7) transportierten Gase durchströmt wird.

2. Explosionsgeschütztes Gehäuse nach Anspruch 1, **dadurch gekennzeichnet, dass** der Spalt (5, 7) als Labyrinthspalt ausgebildet ist.

3. Expolosionsgeschütztes Gehäuse nach Anspruch 1 oder 2, **dadurch gekennzeichnet, dass** der Körper (31', 33) aus einem Sintermetall gebildet ist.

4. Explosionsgeschütztes Gehäuse nach einem der Ansprüche 1 bis 3, **dadurch gekennzeichnet, dass** der poröse Körper (31') den Spalt (5, 7) über einen Teil seiner Länge begrenzt.

5. Explosionsgeschütztes Gehäuse nach einem der Ansprüche 1 bis 3, **dadurch gekennzeichnet, dass** der poröse Körper (33) am eingangsseitigen oder ausgangsseitigen Ende der Spalte (7) angeordnet ist.

6. Explosionsgeschütztes Gehäuse nach einem der Ansprüche 1 bis 5, **dadurch gekennzeichnet, dass** wenigstens eine der Spaltoberflächen katalytisch wirksam ausgebildet ist.

7. Expolosionsgeschütztes Gehäuse nach einem der Ansprüche 1 bis 6, **dadurch gekennzeichnet, dass** der poröse Körper (31', 33) eine katalytisch wirksam ausgebildete innere Oberfläche aufweist.

## Claims

1. Flameproof housing (1) for an electric motor, which has gaps (5, 7) by virtue of the design, which are designed to be resistant to ignition flashovers in accordance with the requirements for pressure-resistant encapsulated housing (1) and have gap surfaces which are essentially parallel to one another, **characterized in that** each gap (5, 7) is bounded in places by a porous body (31', 33) composed of a highly thermally conductive material, through at least a portion of which the gases which are transported in the gap (5, 7) flow.

2. Flameproof housing according to Claim 1, **characterized in that** the gap (5, 7) is in the form of a labyrinth gap.

3. Flameproof housing according to Claim 1 or 2, **characterized in that** the body (31', 33) is formed from a sintered metal.

4. Flameproof housing according to one of Claims 1 to 3, **characterized in that** the porous body (31') bounds the gap (5, 7) over a portion of its length.

5. Flameproof housing according to one of Claims 1 to 3, **characterized in that** the porous body (33) is arranged at the inlet or outlet end of the gap (7).

6. Flameproof housing according to one of Claims 1 to 5, **characterized in that** at least one of the gap surfaces is designed to have a catalytic effect.

7. Flameproof housing according to one of Claims 1 to 6, **characterized in that** the porous body (31', 33) has an inner surface which is designed to have a catalytic effect.

## Revendications

1. Carter de protection (1) à l'égard des explosions d'un moteur électrique qui présente des fentes (5, 7) assurant une sécurité à l'égard de l'amorçage d'un claquage, réalisées selon les exigences de construction pour les carters (1) encapsulés rigidement par pression, ayant des surfaces de fente sensiblement parallèles l'une à l'autre, **caractérisé en ce que** chaque fente (5, 7) est partiellement limitée par un corps poreux (31', 33) en matière ayant une bonne conductibilité thermique, qui est, au moins en partie, traversé par les gaz transportés dans les fentes (5, 7).

2. Carter de protection à l'égard des explosions selon la revendication 1, **caractérisé en ce que** la fente (5,7) est en forme de labyrinthe.

3. Carter de protection à l'égard des explosions selon la revendication 1 ou 2, **caractérisé en ce que** le corps (31', 33) est réalisé en métal fritté.

4. Carter de protection à l'égard des explosions selon l'une des revendications 1 à 3, **caractérisé en ce que** le corps poreux (31') limite la fente (5, 7) sur une partie de sa longueur.

5. Carter de protection à l'égard des explosions selon l'une des revendications 1 à 3, **caractérisé en ce que** le corps poreux (33) est disposé du côté de l'entrée ou du côté de la sortie de la fente (7).

6. Carter de protection à l'égard des explosions selon l'une des revendications 1 à 5, **caractérisé en ce qu'**au moins, l'une des surfaces des fentes est réalisée de façon à avoir un effet catalytique.

7. Carter de protection à l'égard des explosions selon l'une des revendications 1 à 6, **caractérisé en ce que** le corps poreux (31', 33) présente une surface intérieure réalisée de façon à avoir un effet catalytique.
